# EUROPEAN PATENT SPECIFICATION

(11) **EP 3 325 258 B1**
(45) Date of publication and mention of the grant of the patent: **14.08.2024**
(21) Application number: 16759845.7
(22) Date of filing: 25.08.2016
(51) Int. Cl.: B29D 11/00, B29C 33/70

(54) **METHOD AND APPARATUS FOR MANUFACTURING OPHTHALMIC LENSES**
VERFAHREN UND VORRICHTUNG ZUR HERSTELLUNG VON OPHTHALMISCHEN LINSEN
PROCÉDÉ ET APPAREIL DE PRODUCTION DE LENTILLES OPHTALMIQUE

(30) Priority: 28.08.2015 GB 201515397
(43) Date of publication of application: 30.05.2018
(73) Proprietor: CooperVision International Limited, Fareham PO15 5RL (GB)
(72) Inventor: DEAN, Gregg A., "deceased" (GB)
(74) Representative: Abel & Imray LLP
(86) International application number: PCT/GB2016/052646
(87) International publication number: WO 2017/037430

(56) References cited:
- EP-A1- 1 768 835
- EP-A2- 1 752 281
- EP-B1- 1 768 835
- JP-A- 2002 096 332
- US-A1- 2005 179 863
- US-A1- 2006 017 185
- US-A1- 2007 178 809
- US-A1- 2007 195 311
- US-A1- 2009 166 507
- US-A1- 2012 139 136
- US-A1- 2015 239 186

## Description

### FIELD

This disclosure relates to the field of ophthalmic lens manufacture. In particular, the disclosure relates to a method of, and apparatus for, manufacturing an ophthalmic lens.

### BACKGROUND

Various methods of manufacturing ophthalmic lenses are known, including spin casting, lathing (for example by diamond turning), and cast molding (for example, using injection molded mold members). In particular, cast molding of ophthalmic lenses involves forming a pair of mold members (i.e., a first mold member and a second mold member), placing a volume of an ophthalmic lens formulation on an optical quality surface of one of the two mold members, and placing the two mold members in contact with each other to form an ophthalmic lens mold assembly that has an ophthalmic lens-shaped cavity containing the ophthalmic lens formulation. The ophthalmic lens mold assembly is then exposed to conditions to cause the ophthalmic lens formulation to polymerize or cure in the ophthalmic lens mold assembly, to form the ophthalmic lens. As understood in the art, the mold members may be referred to as "mold sections" (i.e., first and second mold sections) or "mold halves" (i.e., first and second mold halves). The mold members themselves can be formed by, for example, injection molding or lathing a mold blank or injection molding to produce a partially shaped lens blank, and then lathing that to produce the final mold member.

Ophthalmic lenses are designed and manufactured to satisfy an optical specification, that is, they are manufactured so that selected optical properties have selected values. If the optical properties of lenses are found to have values deviating too far from the selected values, that is beyond specified tolerances, then the lenses are discarded. For example, the optical power of an ophthalmic lens is of course very important, as it is the principal parameter in correcting the vision of an ophthalmic lens wearer. Therefore, after an ophthalmic lens is cast, its power is checked, to make sure that it is within acceptable tolerances. In practice, lens power is typically checked by checking a sample from each batch of contact lenses produced; for example, for a batch size of 40, one contact lens in the batch may be checked, for example using a focimeter. If the sample lens fails to provide the correct power within acceptable tolerances then the whole batch is discarded.

It would be advantageous to reduce the number of contact lenses that are rejected through a failure to satisfy an optical specification.

US2015/0239186A discusses a system for manufacturing contact lenses, which has first optical inspection assembly for determining at least one first optical cup part parameter, a second optical inspection assembly for determining at least one optical combination parameter of the combination of the cured monomeric material formed into a lens and the cup part that bears the lens. US2015/0239186A also discusses a quality check on a top and/or bottom cup.

### SUMMARY

A first aspect of the invention provides a method of manufacturing an ophthalmic lens having the features set out in claim 1 below.

A second aspect of the invention provides an apparatus for manufacturing an ophthalmic lens having the features set out in claim 12 below.

Preferred but optional features of the invention are set out in the dependent claims.

It will be appreciated that features described in relation to one aspect of the present disclosure can be incorporated into other aspects of the present disclosure. For example, an apparatus of the disclosure can incorporate any of the features described with reference to a method of the disclosure, and *vice versa.*

### BRIEF DESCRIPTION OF THE DRAWINGS

Example embodiments of the invention will now be described, by way of example only, with reference to the accompanying drawings.
FIG. 1 is a flowchart showing steps in a prior-art method of ophthalmic lens manufacture.
FIG. 2 is a flowchart showing steps in an example of a method embodying the invention.
FIGs. 3a-3c illustrate an example of a wavefront sensor for use in the method of FIG. 2.
FIG. 4 is a flowchart showing a step of the method of FIG. 2 in more detail, using the wavefront sensor of FIG. 3.

### DETAILED DESCRIPTION

As previously stated, the first aspect provides a method of manufacturing an ophthalmic lens, the method including the steps:
(a) selecting a target value for an optical property for the ophthalmic lens;
(b) forming a first mold member for cast-molding the ophthalmic lens in combination with a second mold member;
(c) measuring a property of the first mold member, the measured property correlating with the optical property of the ophthalmic lens;
(d) determining whether the measured property of the first mold member is consistent with the target value of the optical property of the ophthalmic lens; and
(e) if the measured property of the first mold member is consistent with said target value, continuing with the manufacture of the ophthalmic lens or, if the measured property of the first mold member is not consistent with said target value, discarding the first mold member.

Optionally, a method according to the first aspect is also carried out on the second mold member.

The ophthalmic lens may be a contact lens, for example a hydrogel contact lens, for example a silicone hydrogel contact lens.

The optical property is an optical power, for example a sphere power, a cylinder power or an add power.

The first mold member may be substantially circular in plan view. The first mold member may be a panhandle mold member, that is, a mold member having a head portion, which may be substantially circular, including an optical-quality surface, and a handle or tail portion, which may be elongate, and which extends from the head portion. The first mold member may be a universal mold member, that is, a mold member having two optical surfaces, one of which is configured to form a front surface of an ophthalmic lens and the other of which is configured to form a rear surface of a (second) ophthalmic lens, so that two identical mold members may be used to form the front and rear surfaces of an ophthalmic lens.

The method includes the step of forming the first mold member, for example by injection molding, lathing, or injection molding and then lathing. The method may include the step of forming the second mold member, for example by injection molding, lathing, or injection molding and then lathing.

The first mold member is transparent. The optical property is measured by transmitting light through the mold member, for example, through a transparent mold member.

The first mold member can for example be made from polypropylene, ethylene vinyl alcohol copolymer (EVOH), or NICHIGO G-POLYMER^{™} (Nippon Gohsei, Osaka, Japan).

The second mold member may be shaped and configured to define an optical property of the ophthalmic lens, for example a power (for example a sphere power, a cylinder power or an add power). The second mold member may be shaped and configured to define a fit feature of the lens, for example a feature contributing to the stability of the lens when worn on the eye (for example controlling it orientation and/or rotation), and/or a base curvature of the lens selected to fit the lens to an eye.

The first mold member may form the front (anterior) surface of the ophthalmic lens and the second mold member may form the rear (posterior) surface of the ophthalmic lens. Alternatively, the first mold member may form the rear surface of the ophthalmic lens and the second mold member may form the front surface of the ophthalmic lens.

The measured property of the first mold member may be the same property as the optical property of the lens. For example, when the optical property of the lens is a power, the measured property may be of a power of the first mold member. The measured property may be the focusing or defocusing properties of the mold member, for example by measuring the focal length of the mold half, i.e. the distance from the mold member at which light transmitted through the mold member is focused. Alternatively, the measured property may be a radius of curvature of the first mold member, or a property of the interferometric behavior of the mold member, for example a property measured using a wavefront sensor.

Thus, the skilled person will understand that the measured property correlates with the optical property of the ophthalmic lens because the target value of the optical property of the ophthalmic lens can be calculated from the measured property of the first mold member.

The method includes a calibration step, in which the optical property of the ophthalmic lens is measured for a selection of values of the measured property of the first mold member to provide a correspondence record, for example a look-up table. The method subsequently uses the correspondence record to determine whether the measured property of the first mold member is consistent with the target value of the optical property of the ophthalmic lens.

As used herein, the measured property of the first mold member is consistent with the target value of the optical property of the ophthalmic lens if the value of the measured property of the first mold member can be expected to result in an ophthalmic lens formed using the first mold member having the optical property within an acceptable tolerance of the target value, for example within 10%, 7%, 5%, 2% or even 1% of the target value. For optical properties measured in diopters, it may be that the ophthalmic lens can be expected to have the property to within +/- 0.25 D, 0.20D, 0.15D, 0.10D or 0.05D of the target value.

For measurements of lens spherical power, the method has been found to be particularly effective for powers between -10D and +20D; preliminary experiments suggest that more negative powers than -10D may be more prone to error, but it is expected that those errors can be eliminated through further routine improvement to the method.

If the measured property of the first mold member is consistent with the target value of the optical property of the ophthalmic lens, the manufacture of the ophthalmic lens is continued. The continued manufacture may include the step of repeating the present method on the second mold member. The continued manufacture may include the step of packaging the manufactured ophthalmic lens.

If the measured property of the first mold member is not consistent with the target value of the optical property of the ophthalmic lens, the first mold member is discarded. The first mold member may be discarded completely. The first mold member may be returned to an earlier stage in the manufacturing process, for example for corrective action (for example for corrective lathing in the case of a lathed ophthalmic lens) or for re-use (for example if it is determined that that the mold is suitable for molding a lens the power of which is a useable power, but not the power originally intended for that mold, for example due to a set-up error).

Determination as to whether the measured property of the first mold member is consistent with the target value of the optical property of the ophthalmic lens may be done as part of an initial set-up check, prior to forming any ophthalmic lenses. An initial set-up check can detect errors such as tooling errors, e.g. the wrong insert being used in an injection molding machine used to injection mold the first mold member. Alternatively, the determination may be carried out on every first mold member, or every mold member, of one or more batches of mold members formed in the method. Thus, the check may be part of a continuous production line. Manual intervention may be required to carry out the checks; however, preferably the checks are fully automated. The determination may be carried out on a series of first mold members carried on pucks, for example in an automated production line.

As previously stated, the second aspect provides an apparatus for manufacturing an ophthalmic lens, the apparatus comprising:
(a) a database including a target value for an optical property for the ophthalmic lens and a correlation of said target value with a property of a first mold member;
(b) injection-molding apparatus for forming the first mold member for cast-molding the ophthalmic lens in combination with a second mold member;
(c) measurement apparatus for measuring the property of the first mold member;
(d) a processor configured to determine whether the measured property of the first mold member is consistent with the target value of the optical property of the ophthalmic lens and, if the measured property of the first mold member is not consistent with said target value, to provide a signal indicating that the first mold member is to be rejected.

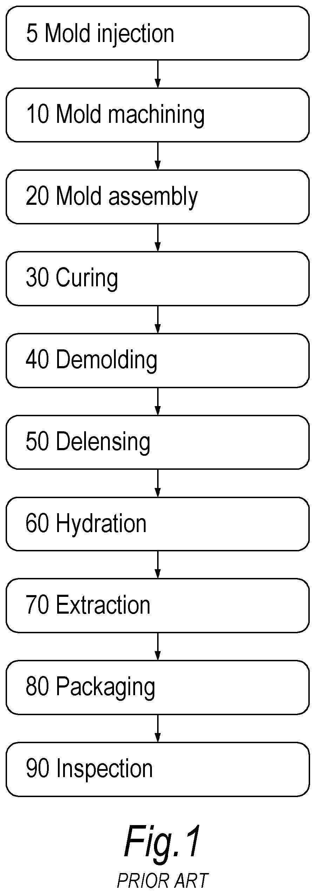

With reference to the drawings, FIG. 1 depicts a prior-art production line for made-to-order ophthalmic lenses. The line comprises: a mold injection apparatus 5, where the mold members are formed by injection molding; a mold machining apparatus 10, where an optical surface corresponding to a made-to-order prescription is cut into the mold member using a lathe; a mold assembly apparatus 20, where a contact lens pre-cursor composition is added to a first mold member and a complementary second mold member is mated with the first mold member to form a mold pair assembly; a curing apparatus 30, where the contact lens precursor material in the mold pair assembly is cured to form a polymerized contact lens; a demolding apparatus 40, where the mold pair assembly is disassembled by removing one of the mold portions; a delensing apparatus 50, where the polymerized contact lens is removed from the remaining mold portion; a hydrating apparatus 60, where the polymerized contact lens is hydrated; an extraction apparatus 70, where unreacted monomers from the precursor material are removed from the hydrated lens, a packaging apparatus 80, where the lens is packaged in a packaging blister; and an inspection apparatus, where the packaged lens is inspected for defects.

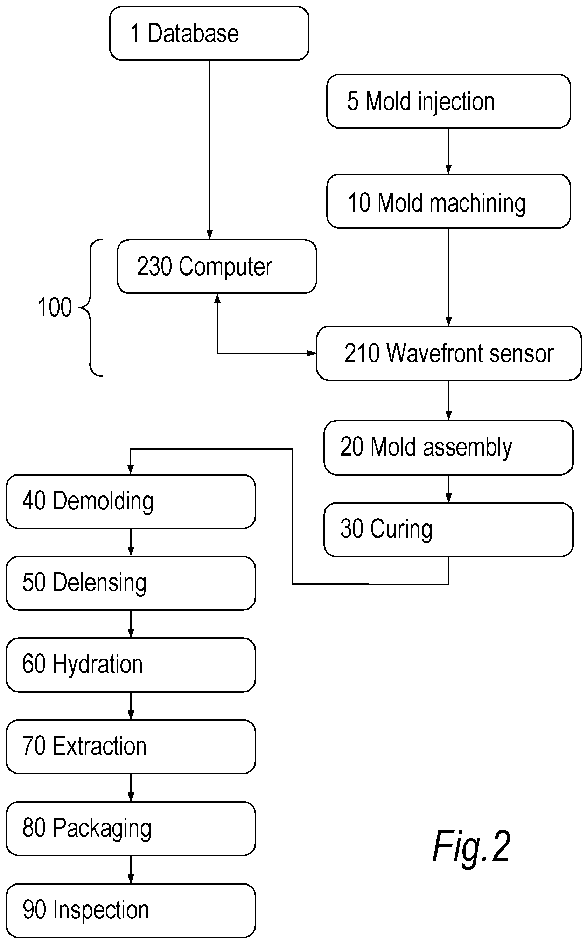

FIG. 2 depicts a production line for made-to-order ophthalmic lenses that is an example embodiment. Compared with the prior-art production line of FIG. 1, the production line of FIG. 2 has an additional apparatus, a mold property check apparatus 100, between the mold machining apparatus 10 and the mold assembly 20, and a database 1.

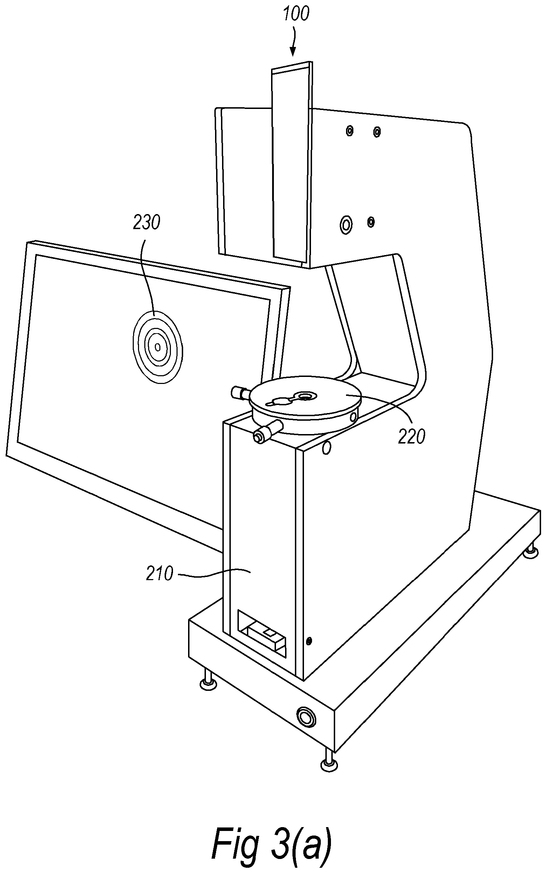

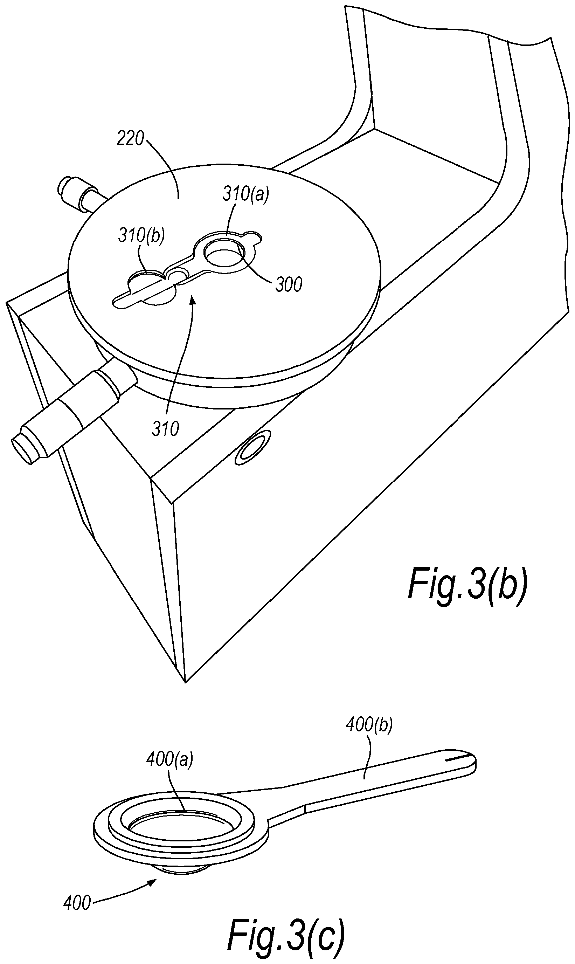

In this example, the mold property check apparatus 100 (FIG. 3(a)) comprises a wavefront sensor 210, carrying a mold tray 220, and a computer 230. The mold tray (FIG. 3(b) is in this example disc-shaped, and defines a hole 300 at its center and a recess 310. The recess 310 is shaped and sized to receive a "pan-handle" mold portion 400 (Fig. 3(c)), in this example having a circular head recess portion 310(a), for receiving the circular head 400(a) of the mold portion 400 (which defines a front or rear optical surface of a contact lens to be made in the mold), and an elongate tail recess portion 310(b), for receiving the elongate tail 400(b) of the mold portion 400.

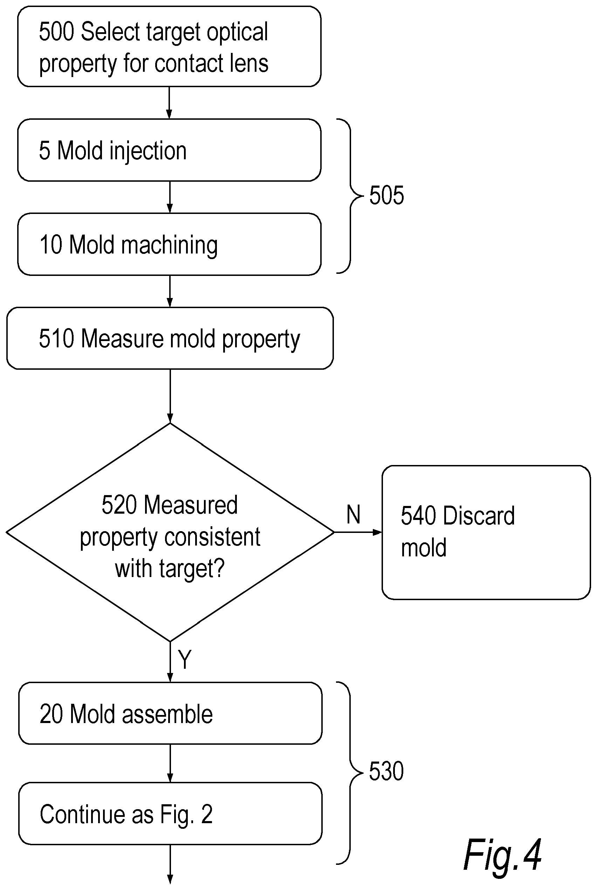

In use (Fig. 4), target values for an optical property of a contact lens are selected (step 500), in this example, values are for the spherical, toric and add powers. The first mold member is formed using the injection molding apparatus 5 and machining apparatus 10 (step 505). The machined mold first mold member is placed on the mold tray, as described above. The wavefront sensor 210 passes coherent light through the hole 300, and hence through the head portion 400(a) of a mold portion 400 (not shown) carried in the recess 310 of the mold tray 220.

Next, the spherical, toric and add powers of the mold portion 400 are measured (step 510). In a manner well-known in the art, the wavefront sensor 210 measures the effect of the head portion 400(a) of the mold portion 400 on the coherent light passing through it, specifically an interference pattern resulting from differences in phase between light passing through different portions of the head portion 400(a) that have different thicknesses. The computer 230 runs commercial software that calculates optical properties of the head portion 400(a) from the interference pattern; in this example, the optical properties include the sphere, cylinder and add powers of the portion of the head portion 400(a) that defines the front or rear optical surface of the contact lens.

The computer 230 compares those measured properties with target optical properties (step 520). If the measured properties are consistent with the target optical properties, within pre-determined tolerances, then the mold portion 400 is passed to the mold assembly apparatus 20 for continuation of the lens manufacturing process (step 530); otherwise, the mold portion 400 is rejected (step 540).

The correlation of the measured properties with the target optical properties is determined by the computer 230 from a look-up table in the database 1. The power of the lens produced is controlled by the radius of curvature of the molds forming the front and back of the lens. Thus, in this example, the look-up table correlates the power of the mold portions with the power of the lens produced therein. In this example, the look-up table is populated with data by measuring the sphere, cylinder and add powers of mold portions and then measuring the sphere, cylinder and add powers of contact lenses produced in pairs of the molds. Once sufficient data has been collected to enable a statistically reliable correlation to be made, the look-up table is complete and further measurements need be made on the molds only, and not necessarily on the lenses produced, although it may be that checks are still carried out on a selection of the lenses.

While the present disclosure has been described and illustrated with reference to particular embodiments, it will be appreciated by those of ordinary skill in the art that the disclosure lends itself to many different variations not specifically illustrated herein.

Reference should be made to the claims for determining the true scope of the present invention. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A method of manufacturing an ophthalmic lens, the method including the steps:
(a) selecting (500) a target value for an optical power for the ophthalmic lens;
(b) forming (505) a first mold member for cast-molding the ophthalmic lens in combination with a second mold member;
(c) measuring (510) a property of the first mold member, the measured property correlating with the optical power of the ophthalmic lens;
wherein the property of the first mold member is measured by transmitting light through the first mold member;
wherein the method further comprises:
a calibration step, in which the optical power of the ophthalmic lens is measured for a selection of values of the measured property of the first mold member to provide a correspondence record and the correspondence record is used subsequently to determine (520) whether the measured property of the first mold member is consistent with the target value of the optical power of the ophthalmic lens; and
if the measured property of the first mold member is consistent with said target value of the optical power, continuing with the manufacture (530) of the ophthalmic lens, and otherwise discarding (540) the first mold member.

2. A method as claimed in any preceding claim, in which the property of the first mold member is measured by measuring focusing or defocusing properties of the mold member.

3. A method as claimed in any preceding claim, in which the measured property of the first mold member is the same property as the optical power of the lens.

4. A method as claimed in any preceding claim, in which the target optical power of the ophthalmic lens is calculated from the measured property of the first mold member.

5. A method as claimed in any preceding claim, in which the measured property of the first mold member is deemed to be consistent with the target optical power of the ophthalmic lens if the value of the measured property of the first mold member is expected to result in an ophthalmic lens, formed using the first mold member, having a value within 10% of the target value.

6. A method as claimed in any preceding claim, in which the optical property is measured in diopters and the ophthalmic lens is expected to have the optical power to within +/- 0.25 D of the target value.

7. A method as claimed in any preceding claim, in which, if the measured property of the first mold member is consistent with the target value of the optical power of the ophthalmic lens, the continued manufacture includes the step of repeating the method of any preceding claim for the second mold member.

8. A method as claimed in any preceding claim, in which, if the measured property of the first mold member is not consistent with the target value of the optical power of the ophthalmic lens, the first mold member is discarded completely.

9. A method as claimed in any of claims 1 to 7,
wherein, if the measured property of the first mold member is not consistent with the target value of the optical power of the ophthalmic lens, the first mold member is returned to an earlier stage in the manufacturing process.

10. A method as claimed in any preceding claim, wherein the determination as to whether the measured property of the first mold member is consistent with the target value of the optical power of the ophthalmic lens is done as part of an initial set-up check, prior to forming any ophthalmic lenses.

11. A method as claimed in any preceding claim, wherein the determination is carried out on every first mold member, or every mold member, of one or more batches of mold members used in the method.

12. An apparatus for manufacturing an ophthalmic lens, the apparatus comprising:
(a) a database (10) including a target value for an optical power for the ophthalmic lens and a correlation of said target value with a property of a first mold member;
wherein the database (10) includes a correspondence record provided by a calibration step, in which the optical power of the ophthalmic lens is measured for a selection of values of the measured property of the first mold member;
(b) an injection-molding apparatus for forming the first mold member for cast-molding the ophthalmic lens in combination with a second mold member;
(c) measurement apparatus for measuring the property of the first mold member by transmitting light through the first mold member;
(d) a processor configured to use the correspondence record to determine (520) whether the measured property of the first mold member is consistent with the target value of the optical power of the ophthalmic lens and, if the measured property of the first mold member is not consistent with said target value, to provide a signal indicating that the first mold member is to be rejected.

## Patentansprüche

1. Verfahren zur Herstellung einer ophthalmischen Linse, wobei das Verfahren die folgenden Schritte umfasst:
(a) Auswahl (500) eines Zielwertes für die optische Stärke der Augenlinse;
(b) Bilden (505) eines ersten Formteils zum Gießen der ophthalmischen Linse in Kombination mit einem zweiten Formteil;
(c) Messen (510) einer Eigenschaft des ersten Formteils, wobei die gemessene Eigenschaft mit der optischen Stärke des Brillenglases korreliert;
wobei die Eigenschaft des ersten Formteils durch Leiten von Licht durch das erste Formteil gemessen wird,
wobei das Verfahren ferner einen Kalibrierungsschritt umfasst, bei dem die optische Stärke der ophthalmischen Linse für eine Auswahl von Werten der gemessenen Eigenschaft des ersten Formteils gemessen wird, um einen Korrespondenzdatensatz bereitzustellen, und der Korrespondenzdatensatz anschließend verwendet wird, um zu bestimmen (520), ob die gemessene Eigenschaft des ersten Formteils mit dem Zielwert der optischen Stärke der ophthalmischen Linse konsistent ist; und
wenn die gemessene Eigenschaft des ersten Formteils mit dem Zielwert der optischen Stärke übereinstimmt, Fortsetzen der Herstellung (530) der ophthalmischen Linse und andernfalls Verwerfen des ersten Formteils (540).

2. Verfahren nach einem der vorhergehenden Ansprüche, bei dem die Eigenschaft des ersten Formteils durch Messung der Fokussierungs- oder Defokussierungseigenschaften des Formteils gemessen wird.

3. Verfahren nach einem der vorhergehenden Ansprüche, bei dem die gemessene Eigenschaft des ersten Formteils die gleiche Eigenschaft wie die optische Stärke der Linse ist.

4. Verfahren nach einem der vorhergehenden Ansprüche, bei dem die angestrebte optische Stärke der ophthalmischen Linse aus der gemessenen Eigenschaft des ersten Formteils berechnet wird.

5. Verfahren nach einem der vorhergehenden Ansprüche, bei dem die gemessene Eigenschaft des ersten Formteils als mit der angestrebten optischen Stärke der ophthalmischen Linse übereinstimmend angesehen wird, wenn der Wert der gemessenen Eigenschaft des ersten Formteils voraussichtlich zu einer ophthalmischen Linse führt, die unter Verwendung des ersten Formteils geformt wird und einen Wert innerhalb von 10 % des angestrebten Werts aufweist.

6. Verfahren nach einem der vorhergehenden Ansprüche, bei dem die optische Eigenschaft in Dioptrien gemessen wird und die optische Stärke der ophthalmischen Linse innerhalb von +/- 0,25 D des Zielwertes liegen soll.

7. Verfahren nach einem der vorhergehenden Ansprüche, bei dem, wenn die gemessene Eigenschaft des ersten Formteils mit dem Zielwert der optischen Stärke der ophthalmischen Linse übereinstimmt, die weitere Herstellung den Schritt der Wiederholung des Verfahrens nach einem der vorhergehenden Ansprüche für das zweite Formteil umfasst.

8. Verfahren nach einem der vorhergehenden Ansprüche, bei dem, wenn die gemessene Eigenschaft des ersten Formteils nicht mit dem Zielwert der optischen Stärke der ophthalmischen Linse übereinstimmt, das erste Formteil vollständig verworfen wird.

9. Verfahren nach einem der Ansprüche 1 bis 7, wobei, wenn die gemessene Eigenschaft des ersten Formteils nicht mit dem Zielwert der optischen Stärke der ophthalmischen Linse übereinstimmt, das erste Formteil in ein früheres Stadium des Herstellungsprozesses zurückgeführt wird.

10. Verfahren nach einem der vorhergehenden Ansprüche, wobei die Bestimmung, ob die gemessene Eigenschaft des ersten Formteils mit dem Zielwert der optischen Stärke der ophthalmischen Linse übereinstimmt, als Teil einer anfänglichen Einrichtungsprüfung vor dem Formen von ophthalmischen Linsen durchgeführt wird.

11. Verfahren nach einem der vorhergehenden Ansprüche, wobei die Bestimmung an jedem ersten Formteil oder jedem Formteil einer oder mehrerer Chargen von Formteilen, die in dem Verfahren verwendet werden, durchgeführt wird.

12. Vorrichtung zur Herstellung einer ophthalmischen Linse, wobei die Vorrichtung umfasst:
(a) eine Datenbank (10), die einen Zielwert für eine optische Stärke für die ophthalmische Linse und eine Korrelation des Zielwerts mit einer Eigenschaft eines ersten Formteils enthält;
wobei die Datenbank (10) einen Korrespondenzdatensatz enthält, der durch einen Kalibrierungsschritt bereitgestellt wird, bei dem die optische Stärke der ophthalmischen Linse für eine Auswahl von Werten der gemessenen Eigenschaft des ersten Formteils gemessen wird;
(b) eine Spritzgießvorrichtung zum Formen des ersten Formteils zum Gießen der ophthalmischen Linse in Kombination mit einem zweiten Formteil;
(c) ein Messgerät zum Messen der Eigenschaft des ersten Formteils durch Leiten von Licht durch das erste Formteil;
(d) einen Prozessor, der so konfiguriert ist, dass er den Korrespondenzdatensatz verwendet, um zu bestimmen (520), ob die gemessene Eigenschaft des ersten Formteils mit dem Zielwert der optischen Stärke der ophthalmischen Linse übereinstimmt, und, wenn die gemessene Eigenschaft des ersten Formteils nicht mit dem Zielwert übereinstimmt, ein Signal bereitzustellen, das anzeigt, dass das erste Formteil verworfen werden muss.

## Revendications

1. Procédé de fabrication d'une lentille ophtalmique, le procédé incluant les étapes de :
(a) sélection (500) d'une valeur cible pour une puissance optique pour la lentille ophtalmique ;
(b) formation (505) d'un premier organe de moule pour le moulage par coulée de la lentille ophtalmique en combinaison avec un second organe de moule ;
(c) mesure (510) d'une propriété du premier organe de moule, la propriété mesurée étant en corrélation avec la puissance optique de la lentille ophtalmique ;
dans lequel la propriété du premier organe de moule est mesurée par transmission d'une lumière à travers le premier organe de moule ;
dans lequel le procédé comprend en outre :
une étape d'étalonnage, au cours de laquelle la puissance optique de la lentille ophtalmique est mesurée pour une sélection de valeurs de la propriété mesurée du premier organe de moule afin de fournir un enregistrement de correspondance et l'enregistrement de correspondance est utilisé ultérieurement pour déterminer (520) si la propriété mesurée du premier organe de moule est cohérente avec la valeur cible de la puissance optique de la lentille ophtalmique ; et
si la propriété mesurée du premier organe de moule est cohérente avec ladite valeur cible de la puissance optique, la poursuite de la fabrication (530) de la lentille ophtalmique, et sinon la mise au rebut (540) du premier organe de moule.

2. Procédé tel que revendiqué dans une quelconque revendication précédente, dans lequel la propriété du premier organe de moule est mesurée en mesurant des propriétés de focalisation ou de défocalisation de l'organe de moule.

3. Procédé tel que revendiqué dans une quelconque revendication précédente, dans lequel la propriété mesurée du premier organe de moule est la même propriété que la puissance optique de la lentille.

4. Procédé tel que revendiqué dans une quelconque revendication précédente, dans lequel la puissance optique cible de la lentille ophtalmique est calculée à partir de la propriété mesurée du premier organe de moule.

5. Procédé tel que revendiqué dans une quelconque revendication précédente, dans lequel la propriété mesurée du premier organe de moule est considérée comme cohérente avec la puissance optique cible de la lentille ophtalmique si la valeur de la propriété mesurée du premier organe de moule est censée aboutir à une lentille ophtalmique, formée à l'aide du premier organe de moule, ayant une valeur à moins de 10 % de la valeur cible.

6. Procédé tel que revendiqué dans une quelconque revendication précédente, dans lequel la propriété optique est mesurée en dioptries et la lentille ophtalmique est censée avoir la puissance optique à +/-0,25 D de la valeur cible.

7. Procédé tel que revendiqué dans une quelconque revendication précédente, dans lequel, si la propriété mesurée du premier organe de moule est cohérente avec la valeur cible de la puissance optique de la lentille ophtalmique, la poursuite de la fabrication inclut l'étape de répétition du procédé selon une quelconque revendication précédente pour le second organe de moule.

8. Procédé tel que revendiqué dans une quelconque revendication précédente, dans lequel, si la propriété mesurée du premier organe de moule n'est pas cohérente avec la valeur cible de la puissance optique de la lentille ophtalmique, le premier organe de moule est complètement mis au rebut.

9. Procédé selon l'une quelconque des revendications 1 à 7, dans lequel, si la propriété mesurée du premier organe de moule n'est pas cohérente avec la valeur cible de la puissance optique de la lentille ophtalmique, le premier organe de moule est renvoyé à un stade antérieur du processus de fabrication.

10. Procédé tel que revendiqué dans une quelconque revendication précédente, dans lequel la détermination de la cohérence ou non entre la propriété mesurée du premier organe de moule et la valeur cible de la puissance optique de la lentille ophtalmique est effectuée dans le cadre d'un contrôle initial de mise en place, avant la formation de toute lentille ophtalmique.

11. Procédé tel que revendiqué dans une quelconque revendication précédente, dans lequel la détermination est réalisée sur chaque premier organe de moule, ou chaque organe de moule, d'un ou de plusieurs lots d'organes de moule utilisés dans le procédé.

12. Appareil pour la fabrication d'une lentille ophtalmique, l'appareil comprenant :
(a) une base de données (10) incluant une valeur cible pour une puissance optique pour la lentille ophtalmique et une corrélation de ladite valeur cible avec une propriété d'un premier organe de moule ;
dans lequel la base de données (10) inclut un enregistrement de correspondance fourni par une étape d'étalonnage, au cours de laquelle la puissance optique de la lentille ophtalmique est mesurée pour une sélection de valeurs de la propriété mesurée du premier organe de moule ;
(b) un appareil de moulage par injection pour former le premier organe de moule en vue du moulage par coulée de la lentille ophtalmique en combinaison avec un second organe de moule ;
(c) un appareil de mesure pour mesurer la propriété du premier organe de moule par transmission d'une lumière à travers le premier organe de moule ;
(d) un processeur configuré pour utiliser l'enregistrement de correspondance afin de déterminer (520) si la propriété mesurée du premier organe de moule est cohérente avec la valeur cible de la puissance optique de la lentille ophtalmique, et si la propriété mesurée du premier organe de moule n'est pas cohérente avec ladite valeur cible, pour fournir un signal indiquant que le premier organe de moule doit être rejeté.
